# EUROPÄISCHE PATENTSCHRIFT

(11) **EP 2 310 701 B1**
(45) Veröffentlichungstag und Bekanntmachung des Hinweises auf die Patenterteilung: **06.01.2016**
(21) Anmeldenummer: 09775908.8
(22) Anmeldetag: 26.06.2009
(51) Int. Cl.: F16C 19/52, F16C 41/00, G01P 3/44, F16C 17/24

(54) **LAGER MIT EINEM MAGNETEN**
BEARING COMPRISING A MAGNET
PALIER À AIMANT

(30) Priorität: 17.07.2008 DE 102008033616
(43) Veröffentlichungstag der Anmeldung: 20.04.2011
(73) Patentinhaber: Schaeffler Technologies AG & Co. KG, 91074 Herzogenaurach (DE)
(72) Erfinder: HEIM, Jens, 97493 Bergrheinfeld (DE); HILBINGER, Jürgen, 91413 Neustadt (DE); SCHMID, Günther, 90475 Nürnberg (DE); SCHMIDT, Dirk, 98527 Suhl (DE); SÜSSKIND, Roland, 98617 Neubrunn (DE)
(86) Internationale Anmeldenummer: PCT/DE2009/000886
(87) Internationale Veröffentlichungsnummer: WO 2010/006573

(56) Entgegenhaltungen:
- EP-A1- 1 881 300
- JP-A- 1 310 522
- JP-A- 63 114 107
- JP-A- 2007 309 686
- US-A- 5 480 716
- US-A1- 2007 257 665
- US-B1- 6 559 633

## Beschreibung

### Gebiet der Erfindung

Die Erfindung liegt auf dem Gebiet des Maschinenbaus, spezieller auf dem Gebiet der Dynamik, die sich mit bewegten Teilen und Lagern befasst.

Lager werden zur Führung und Stützung translatorischer oder rotatorischer Bewegungen mit oder ohne11 Schmierstoffe, als Gleitlager oder als Wälzlager ausgeführt.

Der Einsatz von Magneten ist auch im Bereich der Lagertechnik bekannt, wo sie beispielsweise zur Kodierung von Lagerringen mittels magnetischer Markierungen eingesetzt werden können, um Winkelmessungen beziehungsweise Drehzahlmessungen mit Hilfe von entsprechenden magnetischen Sensoren wie Hallsensoren oder magnetostriktiven Sensoren zu erlauben.

Die deutsche Patentschrift Nr. DE 102004063462 B3 beschreibt beispielsweise einen Maßstabträger für magnetische Längen- oder Winkelmessung in Form eines in einem Wälzlager eingebauten magnetischen Ringes, der in Form einer Magnetpulverpaste in eine Nut eingebracht und darauffolgend gehärtet und magnetisiert wird. Die Magnetisierung kann derart geschehen, dass eine bestimmte Kodierung eingebracht wird.

Das hartmagnetische Pulver, das gemäß dem genannten Stand der Technik verwendet wird, ist NdFeB, ein Seltene-Erden-Material oder Ba-Ferrit. Als Kunststoffmatrix wird Epoxitharz erwähnt.

Somit ist ein in situ, das heißt, in ein Gerät eingebrachter Magnetwerkstoff in Form einer pastösen, mit einem Hartmagnetpulver gefüllten Masse mit nachfolgender Härtung und Magnetisierung grundsätzlich für Messzwecke bekannt.

Die amerikanische Patentschrift US 6559633 offenbart ein Lager mit einem Magnetkörper, der als Bindemittel für ein magnetisches Pulver ein Acrylat (zusätzlich auch ein Vulkanisat oder thermoplastisches Elastomer, auch aufspritzbar auf einen Träger und danach härtbar) aufweist.

Die vorliegende Erfindung hat sich zum Ziel gesetzt, die Anwendung von magnetischen Werkstoffen für die Lagertechnik weiter zu verbessern und deren Einsatzbereich zu erweitern.

Die Aufgabe wird gemäß der Erfindung mit den Merkmalen der Patentansprüche 1 gelöst, Vorteilhafte Ausgestaltungen der Erfindung sind den abhängigen Ansprüchen entnehmbar.

Die Erfindung bezieht sich demnach gemäß dem ersten Patentanspruch auf ein Lager zur Übertragung einer Translations- oder Rotationsbewegung wobei wenigstens ein Magnet einerseits und ein Magnetsensor andererseits an gegeneinander bewegten Teilen des Lagers vorgesehen ist, und wobei der wenigstens eine Magnet als pastöse Masse mit einer Kunststoffkomponente in Form eines Silicons, eines Acrylats oder eines Polyuretans auf einen Teil des Lagers aufgetragen und erst nach dem Auftrag gehärtet ist und das der /die in pastöser Form aufgebrachten Magneten durch eine räumlich verteilte Magnetisierung derart individualisiert codiert sind, dass eine Wiedererkennung und/oder Rückverfolgung eines Lagers ermöglicht ist.

Durch die genannten Materialien entsteht ein Magnetwerkstoff, der weitgehend inert gegenüber den üblicherweise in einem Lager herrschenden Umgebungsbedingungen wie beispielsweise aggressiven Flüssigkeiten ist. Zudem ist die Verarbeitung einer derartigen Kunststoffmatrix besonders einfach dadurch, dass beispielsweise Acrylate schnell und unproblematisch durch UV- Strahlung härtbar sind.

Zudem haften Acrylate und Polyuretan besonders gut auf metallischen Basismaterialien von Lagern.

Es ist damit beispielsweise die Möglichkeit gegeben, echte und gefälschte Magnete zu erkennen oder den Weg eines Magneten oder einer Charge zu verfolgen.

Auch zur Wiedererkennung einer magnetisch aufgebrachten Firmen-Marke kann eine derartige Magnetische Codierung dienen.

Vorteile werden dadurch erreicht, dass das hartmagnetische Pulver einen Seltene-Erden-Magnetwerkstoff, AlNiCo, Ba-Ferrit oder besonders vorteilhaft Sr-Ferrit enthält. Damit lassen sich Werkstoffe mit besonders ausgeprägten hartmagnetischen Eigenschaften realisieren.

Ein vorteilhaftes Verfahren zur Herstellung eines oben beschriebenen Lagers sieht vor, dass die pastöse Masse an einem Teil des Lagers eingebracht, nachfolgend durch UV- Bestrahlung gehärtet und magnetisiert wird.

Es kann zudem vorteilhaft vorgesehen sein, dass die pastöse magnetische Masse mit einer optisch erkennbaren Sustanz versetzt ist, die zumindest nach dem Aushärtungsprozeß den Magnetkörper einfärbt oder reflektierend, fluoreszierend oder phosphoreszierend ausgestaltet.

Beispielsweise können die mit hartmagnetischem Pulver gefüllten Kunststoffpasten zusätzlich mit einem Farbstoff gefüllt werden, so dass die Paste für den Betrachter auffallend sichtbar sein würde. Dies könnte sowohl eine der Farben aus dem üblichen sichtbaren Farbenspektrum sein, als auch Silber oder Gold. Vorteilhaft bei einer derartigen farblichen Ausprägung wäre, dass die Paste sich von dem umliegenden Wälzlagerstahl deutlich abhebt, was den Einbau oder die Einstellung des Winkelmesssystems oder des Lagers oder des Motors vereinfacht und unterstützt. Auch könnten durch diese Maßnahme Einbau- oder Montagefehler ausgeschlossen oder diesen vorgebeugt werden. Zudem ist ersichtlich, ob es sich bei dem vorliegenden Lager um eines mit oder ohne integriertes Winkelmesssystem handelt. Die Paste kann nicht nur vollflächig, sondern auch in Mustern, Strukturen oder Schriftzeichenformen aufgetragen werden, die nicht nur den Blick des Betrachters auf das Lager lenken, sondern auch beispielsweise als Montage- oder Einbauhinweise wirken.

Im folgenden wird die Erfindung anhand eines Ausführungsbeispiels in einer Zeichnung gezeigt und nachfolgend beschrieben.

Dabei zeigt
- Figur 1: ein kombiniertes Radial/Axiallager in einem Längsschnitt mit mehreren Varianten von eingebetteten ringförmigenMagneten;
- Figur 2: ein Radiallager mit einem am Außenring eingebetteten Magneten;
- Figuren 4 bis 7: ein Radiallager mit unterschiedlich positionierten eingebetteten Magneten; sowie
- Figur 9: eine Vorrichtung zum Einbringen eines oder mehrerer Magneten an einem rotierenden Körper.

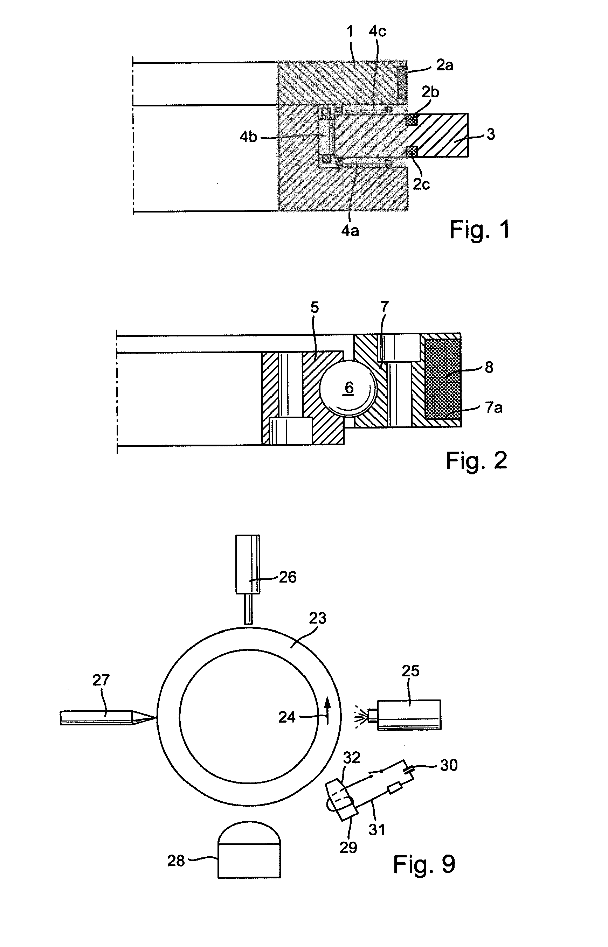

Figur 1 zeigt in einem schematischen Längsschnitt ein kombiniertes Radial/Axiallager mit einer drehbaren Wellenscheibe 1, die radial und axial gegenüber einer ortsfesten Gehäusescheibe 3 abgestützt und mittels Wälzkörpern 4a, 4b, 4c in Form von Walzen gelagert ist.

Die entsprechenden Magnetkörper sind vorteilhaft in Form einer Paste in die jeweiligen Nuten eingebracht, wobei drei Magnetkörper 2a, 2b, 2c gezeigt sind, die alternativ oder gleichzeitig vorgesehen sein können.

Die entsprechenden Ringe können einerseits magnetisch kodiert sein um mittels eines ortsfesten Magnetsensors eine Stellungsdetektion der drehbaren Teile zu erlauben, sie können jedoch auch mit einer rheologischen Flüssigkeit im Bereich der Wälzkörper zusammenwirken, um durch partielle Versteifung der Flüssigkeit entweder das Lager im Bereich zwischen den Magnetkörpern 2a, 2b oder im Bereich des Magnetkörpers 2c abzudichten oder aber einen Einfluss auf die Viskosität einer Schmiersubstanz im Lager auszuüben um eine gewünschte Viskosität zu erzeugen.

Eine derartige Wellenscheibe 1 wird beispielsweise als Rundtisch bei Werkzeugmaschinen eingesetzt.

Beim Einbringen der pastösen Magnetmasse in eine umfangsseitige oder stirnseitige Nut eines Lagerrings wird zunächst die Nut gefüllt und überschüssige Paste durch Abstreichen beziehungsweise Abrakeln entfernt. Danach wird die Vergussmasse ausgehärtet und magnetisiert.

Zudem kann eine Schutzschicht über der Magnetmasse vorgesehen werden, die diese vor korrosiven Einflüssen schützt.

Insbesondere Seltene-Erden-Füllstoffe sind sehr anfällig gegen Korrosion, so dass ein solcher Schutz z.B. in Form eines Lackes oder einer Metallisierung je nach den Umgebungsbedingungen notwendig oder vorteilhaft sein kann.

Die Paste ist als vollständiger Ring in die jeweiligen Lagerteile eingebracht, wobei durch geeignete Querschnittsformen der Nuten, beispielsweise als Schwalbenschwanznut oder mit anders geformten Hinterschneidungen die Positionierung der Magnetmasse nach der Härtung gesichert werden kann. Zudem kann die Paste auch allein oder zusätzlich durch Klebewirkung haften.

Die Paste kann ersatzweise auch auf ein Trägerblech, einen Trägerring oder eine Folie aufgetragen werden, die dann auf das Wälzlager aufgeklebt oder aufgeschrumpft werden.

Bei der Magnetisierung der Magnetkörper ist darauf zu achten, dass die Polbreite jeweils möglichst sehr viel größer ist als die Schichtdicke des Magnetkörpers.

Anstelle des vor Ort gehärteten Magnetwerkstoffes können auch vorfabrizierte Magneten in Zusammenhang mit rheologischen Flüssigkeiten im Lagerbereich eingesetzt werden.

Wird eine magnetische Paste wie oben beschrieben verwendet, so werden üblicherweise hartmagnetische Pulver, zum Beispiel NdFeB, SmCo, AlNiCo, Ba-Ferrit oder Sr-Ferrit verwendet, die möglichst homogen mit organischen Bindern, Verguss- oder Spritzmassen gemischt werden. Es können auch typische Lacke oder Klebstoffe verwendet werden. Als Basis bietet sich Epoxit, PUR, Silikon, ein Acrylat oder ein Elastomer an. Generell ist die Verwendung einer Kunststoffmatrix möglich.

Für die Herstellung einer gut verarbeitbaren Paste können entsprechende Lösungsmittel beigemischt werden um die erforderliche Viskosität einzustellen.

Die Masse kann dann im Siebdruck, durch Sprühen, Strahlen, Piezodrucken, Schleudern, Schlitzfließen, Schablonendruck, Tampondruck, Flexodruck, Spinning (gleichflächiger Auftrag durch Fliegkraft bei schneller Rotation eines Substrats) aufgetragen und überschüssigen Mengen können abgestrichen beziehungsweise gerakelt werden.

Wird eine Nut aufgefüllt, so kann auch nach dem Aushärten, bei dem nochmals eine Volumenänderung stattfinden kann, die Oberfläche plan geschliffen werden.

Der Magnetkörper kann auch zunächst als Paste auf eine Trägerfolie, beispielsweise aus Edelstahl, aufgeklebt und dann diese mittels Klebstoff oder eines Klebebandes an den gewünschten Ort geklebt werden.

Das Erhärten der Kunststoffmatrix kann durch Aushärten bei Raumtemperatur, Heißlufteinwirkung, Wärme im Ofen (bei 120° C, typisch bis 180° C) oder durch Druck oder Strahlung (Infrarot, UV-gehärtet) oder durch Ausdiffusion von Lösungsmitteln erreicht werden.

Nach dem Härten findet selektiv und je nach der gewünschten Polverteilung oder Codierung eine Magnetisierung durch Wirkung starker Magnetfelder beispielsweise mittels Permanentmagneten oder durch eine Impulskondensatorentladung statt. Bei der Impulskondensatorentladung können Stromstärken bis zu 18 kA erreicht und durch Leiterwicklungen in entsprechende Magnetfelder umgesetzt werden.

Die Beschichtung mit der pastösen Masse kann in einer oder mehreren Lagen erfolgen wobei vorteilhafte Schichtdicken bei Sensoranwendungen zwischen 25 und 800 µm liegen, bei Aktuatoranwendungen, das heißt bei Verwendung der Magneten zur Erzeugung einer Erregung beim Elektromotor oder zur Steuerung rheologischer Eigenschaften zwischen 1 und 10 mm.

Besonders vorteilhaft kann die Erfindung bei elektrischen Mikromotoren (drehender oder linearer Antrieb), bei Direktantrieben oder Magnetventilantrieben geringer Baugröße verwendet werden. Auch der Einsatz in mikroelektromechanischen Systemen (MEMS) bietet sich wegen der guten Verarbeitbarkeit der Paste an.

Als Trägermaterialien für die magnetische Paste bieten sich Eisen, Weicheisen, Stahl, Wälzlagerstahl (beispielsweise 100Cr6), martensitischer oder austenitischer Edelstahl, Keramik, Glas, Messing, Aluminium, Neusilber, Kupfer- und Nickelbasierte Legierungen sowie andere NE-Metalle oder auch flexible Kunststofffolien an (beispielsweise PET).

Durch die guten Klebeeigenschaften der jeweiligen Binder der Kunststoffmatrix kann mit den meisten Substratwerkstoffen eine gute Klebeverbindung erreicht werden. Vorteilhaft ist das Entfetten der jeweiligen Substrate beispielsweise in den Nuten vor dem Aufbringen der Magnetpaste.

Der Füllgrad an hartmagnetischem Pulver in der magnetischen Paste beträgt vorteilhaft zwischen 60 und 90 Gewichtsprozent. Der Pulverteilchendurchmesser sollte zwischen 1 und 200 µm betragen bei NdFeB-Pulver typisch 10 bis 50 µm.

Die erzielbare Oberflächeninduktion nach dem Magnetisieren hängt von dem Pulverfüllgrad des hartmagnetischen Pulvers in der Paste ab sowie von der erzielten magnetischen Flussdichte beim Magnetisieren, die ihrerseits von der Stromstärke beim Magnetisierungsstoß sowie den äußeren Umgebungsbedingungen wie beispielsweise dem Vorhandensein eines Rückschlussjoches beim Magnetisieren abhängt.

Zum Erreichen einer hohen Oberflächeninduktion sollten auch Lufteinschlüsse beziehungsweise Blasen in der Paste möglichst vermieden werden.

Nach dem Erhärten sollte der jeweilige Magnetkörper insbesondere bei der Verwendung von Seltenen-Erden abgedeckt werden, beispielsweise mittels Metallisierung, Klebstofffolien, anderen Folien oder Lacken.

Figur 2 zeigt ein Radiallager, bei dem der Außenring 7 gegenüber dem Innenring 5 mittels kugelförmiger Wälzkörper 6 gelagert ist. An der äußeren Umfangsfläche des Außenrings 7 ist eine Nut 7a vorgesehen, die mit einem in Form einer Paste eingebrachten Magnetkörper 8 angefüllt ist. Da die Tiefe der Nut 7a relativ groß und entsprechend dick die magnetische Schicht 8 ist, eignet sich eine derartige Konstellation beispielsweise für eine Nutzung des Magnetkörpers 8 als permanentmagnetische Komponente eines Antriebs. Es kann zu diesem Zweck ein außenliegender Stator vorgesehen sein, der nicht dargestellt ist.

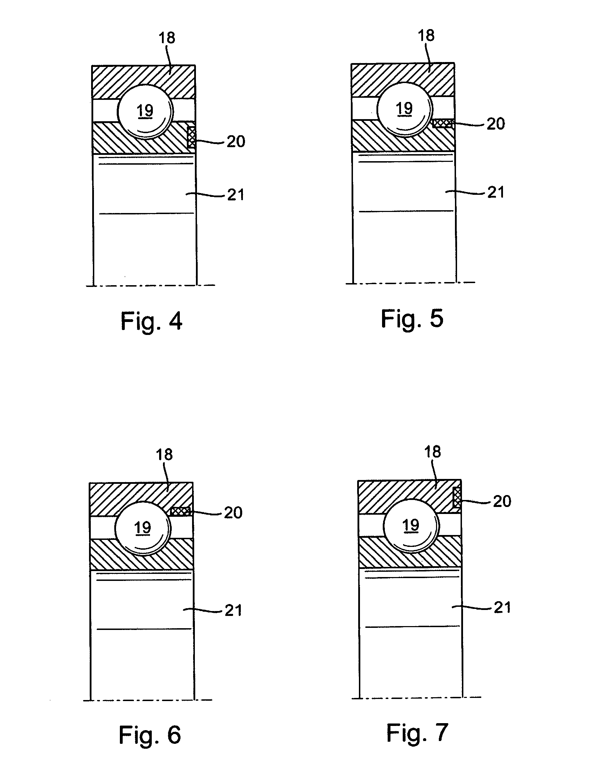

In den Figuren 4 bis 7 ist lediglich das Vorsehen verschiedener Magnetkörper an verschiedenen Stellen des Innen- oder Außenrings eines Lagers in Varianten gezeigt.

Anhand der Figur 9 ist ein automatisches Beschichtungsverfahren für einen Rotationskörper dargestellt. Der Körper 23 wird in Richtung des Pfeils 24 in Rotation versetzt, wobei in einer ersten Bearbeitungsstation 25 eine Entfettung des Auftragsbereiches durch Besprühen mit einem Entfettungsmittel vorgenommen wird. In der Station 26 wird ein von der Drehgeschwindigkeit abhängiger Volumen- oder Massenstrom der magnetischen Paste aufgetragen, beispielsweise in eine Nut an dem Körper 23 im Bereich seiner Mantelfläche.

In der Bearbeitungsstation 27 wird dann überschüssiges Magnetmaterial abgestreift beziehungsweise abgerakelt und in der Bearbeitungsstation 28 findet durch Bestrahlung oder Erhitzung eine Vernetzung der Kunststoffmatrix und damit eine Härtung des Magnetkörpers statt. Mit der Station 29 ist schematisch eine Magnetisierungsstation dargestellt, bei der ein Kondensator 30 einen Impulsstrom in einen Leiter 31 liefert, der in einem Polschuh 32 stoßartig ein Magnetfeld hoher Stärke erzeugt mittels dessen der Magnetkörper auf dem Körper 23 magnetisiert werden kann.

Alternativ zu der strangartigen kontinuierlichen oder abschnittsweise unterbrochenen Auftragungsweise mittels der Bearbeitungsstation 26 kann natürlich auch eine dünnere Schicht des Magnetwerkstoffs durch Offsetdruck oder andere Übertragungsverfahren, die aus der Drucktechnik bekannt sind, vorgenommen werden.

Mittels der Erfindung kann ein Magnetfeld einerseits in bisher nicht bekannter Weise zur Kontrolle einer magnetoviskosen Flüssigkeit in einem Lager verwendet werden, wobei insbesondere der Auftrag des Magnetkörpers in pastöser Erscheinungsform den Bestückungsvorgang vereinfacht. Andererseits können entsprechende Magneten auch für Antriebe auf magnetischer Basis in bisher nicht bekannter Form verwendet werden.

## Patentansprüche

1. Lager zur Übertragung einer Translations- oder Rotationsbewegung wobei wenigstens ein Magnet (2a,2b,2c,11,20) einerseits und ein Magnetsensor andererseits an gegeneinander bewegten Teilen des Lagers vorgesehen ist, wobei der wenigstens eine Magnet als pastöse Masse mit einer Kunststoffkomponente in Form eines Silicons, eines Acrylats oder eines Polyuretans auf einen Teil des Lagers aufgetragen und erst nach dem Auftrag gehärtet ist, **dadurch gekennzeichnet, dass** der/die in pastöser Form aufgebrachten Magneten durch eine räumlich verteilte Magnetisierung derart individualisiert codiert sind, dass eine Wiedererkennung und /oder Rückverfolgung eines Lagers ermöglicht ist.

2. Lager nach Anspruch 1, wobei das hartmagnetische Pulver einen Seltene-Erden-Magnetwerkstoff, AlNiCo, Ba-Ferrit oder Sr-Ferrit enthält.

3. Lager nach einem der vorangehenden Patentansprüche, **dadurch gekennzeichnet, dass** die pastöse Masse mit einer optisch erkennbaren Substanz versetzt ist, die zumindest nach dem Aushärtungsprozeß den Magnetkörper einfärbt oder reflektierend, fluoreszierend oder phosphoreszierend ausgestaltet.

4. Verfahren zur Herstellung eines Lagers nach Anspruch 1 oder 2, bei dem die pastöse Masse an einem Teil des Lagers eingebracht, nachfolgend durch UV- Bestrahlung gehärtet und magnetisiert wird.

## Claims

1. Bearing for the transmission of a translational or rotational movement, at least one magnet (2a, 2b, 2c, 11, 20) on the one hand and a magnetic sensor on the other hand being provided on parts of the bearing that are moved with respect to one another, the at least one magnet being applied as a pasty mass with a polymer component in the form of a silicone, an acrylate or a polyurethane to part of the bearing and only being cured after application, **characterized in that** the magnet(s) applied in a pasty form is/are coded in an individualized manner by a spatially distributed magnetization in such a way as to make recognition and/or traceability of a bearing possible.

2. Bearing according to Claim 1, the magnetically hard powder containing a rare-earth magnetic material, AlNiCo, Ba ferrite or Sr ferrite.

3. Bearing according to one of the preceding patent claims, **characterized in that** the pasty mass is mixed with a visually perceptible substance, which after the curing process has the effect of colouring the magnetic body or making it reflective, fluorescent or phosphorescent.

4. Method for producing a bearing according to Claim 1 or 2, in which the pasty mass is introduced on part of the bearing and is subsequently cured and magnetized by UV irradiation.

## Revendications

1. Palier pour le transfert d'un mouvement de translation ou de rotation, au moins un aimant (2a, 2b, 2c, 11, 20) d'une part et un capteur magnétique d'autre part étant prévus sur des parties du palier déplacées l'une par rapport à l'autre, l'au moins un aimant étant appliqué sous forme de masse pâteuse avec un composant en plastique sous forme de silicone, d'un acrylate ou d'un polyuréthane sur une partie du palier et étant durci seulement après l'application, **caractérisé en ce que** le ou les aimants appliqués sous forme pâteuse sont codés de manière individuelle par une magnétisation répartie spatialement de telle sorte qu'une reconnaissance et/ou un traçage d'un palier soit possible.

2. Palier selon la revendication 1, dans laquelle la poudre magnétique dure contient un matériau magnétique aux terres rares, de l'AlNiCo, de la Ba-ferrite ou de la Sr-ferrite.

3. Palier selon l'une quelconque des revendications précédentes, **caractérisé en ce que** la masse pâteuse est additionnée d'une substance pouvant être détectée optiquement, qui colore le corps magnétique au moins après le processus de durcissement ou qui est configurée de manière réfléchissante, fluorescente ou phosphorescente.

4. Procédé de fabrication d'un palier selon la revendication 1 ou 2, dans lequel la masse pâteuse est introduite au niveau d'une partie du palier, ensuite durcie par rayonnement UV et magnétisée.
